# DEMANDE DE BREVET EUROPEEN

(11) **EP 1 465 103 A1**
(43) Date de publication de la demande: **06.10.2004**
(21) Numéro de dépôt: 04290482.1
(22) Date de dépôt: 23.02.2004
(51) Int. Cl.: G06K 7/00, G07D 7/00

(54) **Dispositif et procédé pour détecter une falsification de carte à puce**

(30) Priorité: 31.03.2003 FR 0303985
(71) Demandeur: GROUPEMENT DES CARTES BANCAIRES "CB", 75008 Paris (FR)
(72) Inventeur: Meggle, Claude, 75014 Paris (FR)
(74) Mandataire: Loisel, Bertrand

(57) **Abrégé**

Pour permettre de détecter une falsification de carte à puce (3) comprenant sur sa face avant un micro-circuit (4) et une image estampée de numéro de compte personnel, un dispositif (1) comprend un afficheur (2) et un circuit électronique (5) agencé pour lire une image numérique de numéro de compte personnel dans le micro-circuit (4) lorsque la carte à puce (3) est mise en contact avec le dispositif (1) et pour afficher sur l'afficheur (2) des chiffres du numéro de compte personnel lu.

## Description

L'invention concerne l'utilisation de cartes à puces. L'utilisation de cartes à puce s'applique à de nombreux domaines dans lesquels on déclenche certaines actions sur présentation de la carte.

Un micro-circuit sur la carte à puce, contient généralement des données qui concernent le détenteur légitime de la carte à puce. Ces données lues par un appareil approprié, permettent de déclencher les actions qui conviennent.

On peut citer les cartes à puce du domaine médical qui permettent de suivre l'état de santé d'un patient. Généralement un médecin ou un pharmacien reconnaissent le patient et pour ce type de carte, il n'est pas nécessairement utile que le patient valide son identité. On peut encore citer les cartes à puce utilisées dans les téléphones mobiles.

Lorsque la carte à puce constitue un badge d'accès à des locaux, l'appareil qui la lit, peut contrôler par exemple que les données du micro-circuit concordent avec une reconnaissance d'empreinte digitale ou autre.

Dans le domaine bancaire, on utilise couramment une carte à puce pour débiter un compte du titulaire de la carte. Généralement, le titulaire de la carte possède un code secret qui lui permet de valider le débit de son compte.

Lorsque le titulaire de la carte veut retirer de l'argent d'un distributeur bancaire, une transaction entre le distributeur bancaire et la banque qui gère le compte du titulaire, permet de vérifier que le code secret concorde avec les données contenues dans le micro-circuit de la carte.

Lorsque le titulaire de la carte, effectue un paiement chez un commerçant, on engage généralement une transaction de vérification du code secret avec la banque pour des montants qui dépassent un seuil prédéterminé. La transaction de vérification avec la banque repose sur un mécanisme élaboré qui permet d'assurer la conformité du paiement. Cependant cette transaction avec la banque a un certain coût de communication. Aussi, pour des montants en dessous du seuil, on économise souvent la transaction de vérification avec la banque. Un lecteur de carte dans lequel on introduit la carte à puce, engage une transaction de vérification simple avec le micro-circuit de la carte qui consiste essentiellement à demander au micro-circuit de la carte, de répondre positivement à une demande de validation du code secret tapé sur le lecteur de carte par le possesseur de la carte.

Cette façon de procéder pour des faibles montant, pose problèmes. Des faussaires se procurent en masse des micro-circuits programmables sur le marché. Ils programment ces micro-circuits de façon à ce qu'ils répondent toujours positivement quelque soit le code tapé sur le lecteur de carte. Ils substituent leurs micro-circuits programmés aux micro-circuits de cartes à puce volés. Un utilisateur de carte falsifiée présente ensuite sa carte à un commerçant pour régler un paiement dont le montant est inférieur au seuil déterminé. La carte à puce sur laquelle a été substitué le micro-circuit, ayant l'apparence d'une vraie carte, le commerçant ne s'aperçoit pas de la falsification. Le commerçant ne s'aperçoit pas plus de la falsification lorsque l'utilisateur tape sur le lecteur un prétendu code secret car le micro-circuit substitué répond toujours positivement à une transaction locale avec le lecteur de carte. Bien qu'inférieur au seuil déterminé, le montant ne correspond à aucun paiement valable. L'inconvénient est que de faux paiements à faibles montant sont ainsi effectués à grande échelle dont résultent des pertes considérables.

Un objet de l'invention est un dispositif pour permettre de détecter une falsification de carte à puce comprenant sur sa face avant un micro-circuit et une image estampée de numéro de compte personnel.

Le dispositif est remarquable en ce qu'il comprend un afficheur et un circuit électronique agencé pour lire une image numérique de numéro de compte personnel dans le micro-circuit lorsque la carte à puce est mise en contact avec le dispositif et pour afficher sur l'afficheur des chiffres du numéro de compte personnel lu.

Ce dispositif permet à un commerçant de vérifier que le micro-circuit de la carte à puce que lui présente une personne pour régler un achat, contient un numéro d'identification personnel avec au moins certains chiffres, à savoir ceux qui sont affichés, qui sont semblables à des chiffres correspondants dans l'image estampée de numéro de compte personnel que le commerçant peut voir sur la carte à puce. Si le dispositif n'affiche pas de chiffres comparables aux chiffres correspondants dans l'image estampée de numéro de compte personnel, le commerçant détecte alors que la carte à puce est très probablement falsifiée.

Le commerçant peut par exemple mettre la carte à puce en contact avec le dispositif, lire les chiffres affichés puis regarder sur la carte à puce que le numéro estampé contient des chiffres qui correspondent à ceux qu'il a vu ou qu'il voit par exemple mémorisés sur l'afficheur.

Avantageusement, le dispositif est agencé pour laisser visibles les chiffres affichés de l'image estampée de numéro de compte personnel lorsque la carte à puce est mise en contact avec le dispositif.

Ainsi, le commerçant peut voir simultanément d'une part, les chiffres affichés qui sont ceux de l'image numérique de compte personnel contenu dans le micro-circuit et d'autre part les chiffres correspondants de l'image estampée sur la carte, sans avoir à les mémoriser dans sa tête ou sans que les chiffres soient mémorisés sur l'afficheur. L'affichage peut alors disparaître dès que la carte n'est plus en contact avec le dispositif.

Plusieurs agencements du dispositif sont possibles pour obtenir cette fonctionnalité. Par exemple, le dispositif peut être agencé pour assurer le contact avec la carte à puce en étant posé sur celle-ci de façon à ne couvrir que le micro-circuit.

Avantageusement encore, le dispositif comprend une ouverture permettant d'introduire seulement une partie la carte à puce comprenant le micro-circuit de façon à ce que les chiffres de l'image estampée du numéro de compte personnel qui sont affichés, restent visibles sur une partie non introduite de la carte à puce.

Ainsi, il suffit au commerçant d'introduire la carte dans l'ouverture du dispositif jusqu'à ce que celle-ci soit en butée sans avoir à se soucier d'un quelconque ajustage de la mise en contact.

De façon optionnelle pour conforter le commerçant dans sa détection de cartes falsifiées, le circuit électronique est agencé pour lire un code de vérification statique dans le micro-circuit et pour afficher une alarme sur l'afficheur si le code de vérification statique ne vérifie pas l'image numérique de numéro de compte personnel qui est lue.

Un autre objet de l'invention est un procédé pour détecter une falsification de carte à puce comprenant sur sa face avant un micro-circuit et une image estampée de numéro de compte personnel.

Le procédé est remarquable en ce qu'il comprend des étapes consistant à:
- générer une première commande portant sur une lecture d'une image numérique de numéro de compte personnel dans le micro-circuit;
- afficher des chiffres du numéro de compte personnel si le micro-circuit répond à la première commande de lecture en fournissant une image numérique de numéro de compte personnel;
- observer si des chiffres sont affichés en correspondance avec des chiffres de l'image estampée de numéro de compte personnel.

Différentes façons de mise en oeuvre du procédé sont possibles. Par exemple lorsqu'un client passant à une caisse de magasin, introduit sa carte à puce dans un lecteur de carte pour régler un achat en tapant un code personnel, on peut prévoir d'afficher certains chiffres du numéro de compte personnel sur un écran qui fait face à la caissière du magasin. La caissière ayant vu ces chiffres sur son écran, peut ensuite observer si les chiffres qui ont été affichés sont en correspondance avec des chiffres de l'image estampée sur la carte lorsque la caissière retire la carte du lecteur, généralement pour la rendre au client avec le ticket de caisse.

Avantageusement, dans l'étape consistant à afficher des chiffres du numéro de compte personnel lu, les chiffres en correspondance de l'image estampée de numéro de compte personnel, sont visibles sur la carte à puce.

Ceci peut être réalisé par exemple en mémorisant les chiffres sur l'écran qui fait face à la caissière de sorte que celle-ci peut observer en même temps les chiffres affichés sur son écran et les chiffres de l'image estampée de numéro de compte personnel.

Plus particulièrement, une partie de la carte à puce comprenant le micro-circuit est introduite dans un dispositif de façon à ce que les chiffres de l'image estampée du numéro de compte personnel à afficher, restent visibles sur une partie non introduite de la carte à puce.

Ainsi, la caissière par exemple peut observer simultanément les chiffres affichés et les chiffres correspondants de l'image estampée sur la carte sans nécessiter de mémorisation ni sur un écran, ni cérébrale. Le dispositif est par exemple celui en premier objet de l'invention qui, en constituant un ustensile simple indépendant de la caisse enregistreuse, permet d'exécuter le procédé sans modification de la caisse enregistreuse. Le dispositif en premier objet de l'invention, permet aussi à un commerçant d'exécuter le procédé sans avoir recours à un système de caisse enregistreuse complexe.

De façon optionnelle, le procédé est amélioré en y ajoutant des étapes consistant à:
- générer une deuxième commande portant sur une lecture d'un code de vérification statique dans le micro-circuit;
- contrôler que le micro-circuit répond à la deuxième commande de lecture en fournissant un code de vérification statique qui valide l'image numérique de numéro de compte personnel fournie en répondant à la première commande de lecture;
- générer une alarme si le code de vérification statique ne valide pas l'image numérique de numéro de compte personnel fournie en répondant à la première commande de lecture.

D'autres détails et avantages de mise en oeuvre de l'invention ressortent d'un exemple préféré de réalisation dont la description suit en référence aux dessins annexés dans lesquels:
- la figure 1 présente une vue de côté d'un dispositif conforme à l'invention;
- la figure 2 présente une vue de face du dispositif de la figure 1;
- la figure 3 présente un schéma du dispositif des figures 1 et 2;
- la figure 4 montre une image numérique de numéro de compte personnel;
- la figure 5 montre des étapes de procédé conforme à l'invention.

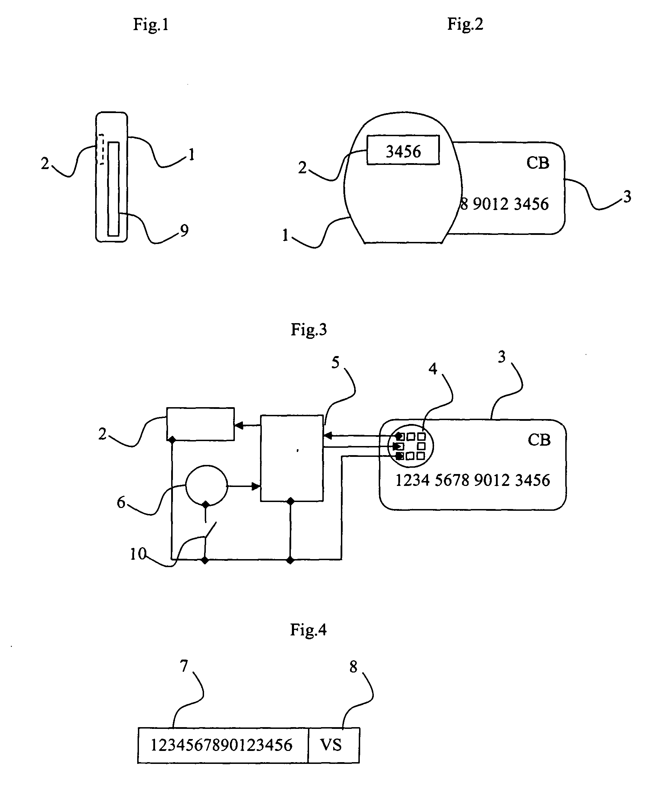

La figure 2 montre une face avant de dispositif 1 conforme à l'invention et la figure 1 montre une projection en vue de droite de la figure 2.

Le dispositif 1 comprend un boîtier de faible taille comparable à celle d'un porte-clé. La taille du boîtier est sensiblement suffisante pour permettre d'y introduire par la droite une partie gauche de carte à puce 3 telle que représentée sur la figure 2. Le faible encombrement du dispositif 1 qui résulte de la faible taille du boîtier, est appréciable pour toute personne qui peut alors facilement y avoir recours pour détecter si une carte à puce a été falsifiée.

La carte à puce 3 est ici une carte bancaire qui comprend sur sa face avant une image estampée de numéro de compte personnel (PAN pour Personal Account Number en anglais) généralement constitué de quatre séries successives de quatre chiffres.

Le dispositif 1 représenté sur les figures 1 et 2, comprend sur sa face avant un afficheur 2 qui permet d'afficher par exemple quatre chiffres. De nombreux types d'afficheurs conviennent tels que les afficheurs à matrices de diodes électroluminescentes ou à plasma. Les afficheurs à cristaux liquides présente cependant l'avantage d'une faible consommation de puissance électrique.

Le dispositif 1 comprend sur un côté, une ouverture 9 de type fente dont l'épaisseur et la largeur est à peine supérieure à l'épaisseur et la largeur de la carte à puce 3. La profondeur de l'ouverture 9 dans le boîtier est d'un ordre de grandeur du tiers à la moitié de la longueur de la carte à puce 3. De préférence disposée sur la droite du boîtier du dispositif 1, l'ouverture 9 permet ainsi d'introduire une partie gauche de carte à puce dans le dispositif 1. Lors d'une introduction en butée au fond de l'ouverture 9, la carte à puce 3 laisse visible une partie droite sur laquelle on peut voir au moins les quatre derniers chiffres du numéro de compte personnel sur la face avant de la carte à puce 3.

On a représenté sur la figure 3, les composants du dispositif 1 avec leurs connexions électriques. Outre l'afficheur 2, le dispositif 1 comprend un circuit électronique 5 avec des plots de contact pour assurer une liaison de communication avec un micro-circuit 4 de carte à puce.

En référence à la figure 4, le micro-circuit 4 de toute carte bancaire non falsifiée comprend à une adresse mémoire particulière une image numérique 7 de numéro de compte personnel PAN qui comprend sous forme binaire, les mêmes chiffres que ceux de l'image estampée de numéro de compte personnel sur la face avant de la carte à puce 3.

Le circuit électronique 5 est agencé pour lire l'image numérique 7 de numéro de compte personnel dans le micro-circuit 4. Différents agencements sont possibles. Par exemple le circuit électronique 5 peut comprendre un circuit combinatoire élaboré pour envoyer une commande de lecture à l'adresse particulière du micro-circuit 4 où se trouve l'image numérique de numéro de compte personnel. Par exemple encore le circuit électronique 5 peut comprendre un micro-processeur et une mémoire qui contient un micro-programme élaboré pour envoyer une commande de lecture à l'adresse particulière du micro-circuit 4 où se trouve l'image numérique de numéro de compte personnel.

Le circuit électronique 5 est aussi agencé pour afficher sur l'afficheur 2 des chiffres, de préférence les quatre derniers chiffres du numéro de compte personnel qui est lu dans l'image numérique. Ici encore, différents agencements sont possibles. Lorsque le circuit électronique 5 comprend un circuit combinatoire, celui-ci est élaboré pour envoyer une commande d'écriture des quatre derniers chiffres vers l'afficheur 2. Lorsque circuit électronique 5 comprend un micro-processeur et une mémoire qui contient un micro-programme, celui-ci est élaboré pour envoyer une commande d'écriture des quatre derniers chiffres vers l'afficheur 2.

Le circuit électronique 5 et l'afficheur 2 sont reliés électriquement d'une par entre eux pour assurer la communication de la commande d'écriture et d'autre part à un emplacement 6 pour en assurer l'alimentation électrique. L'emplacement 6 est prévu pour y mettre un générateur électrique de faible puissance tel qu'une pile plate de type pour montre ou une cellule photovoltaïque de type solaire. Un générateur électrique de faible puissance suffit car l'afficheur 2 et le circuit électronique 5 sont de faible consommation.

La consommation électrique du dispositif 1 peut encore être économisée au moyen d'un interrupteur 10 normalement ouvert et disposé entre d'une part l'emplacement 6 et d'autre part l'afficheur 2 et le circuit électronique 5. L'interrupteur 10 se ferme par une introduction de la carte à puce 3 en butée au fond de l'ouverture 9.

Le dispositif 1 est utilisé pour fonctionner de la façon suivante.

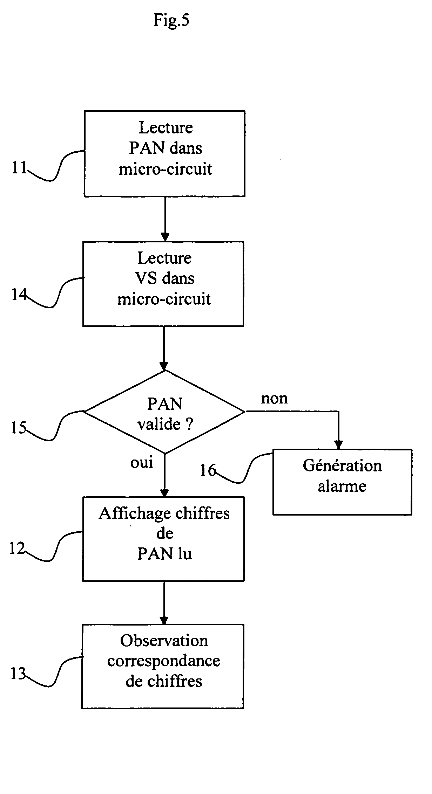

En référence à la figure 5, on exécute le procédé suivant, l'emplacement 9 étant occupé par une pile à l'intérieur du boîtier du dispositif 1 ou par une cellule photovoltaïque en face avant du boîtier du dispositif 1.

En absence de carte à puce introduite dans le dispositif 1, l'interrupteur 10 est ouvert de sorte que le circuit électronique 5 et l'afficheur 2 ne consomment aucune énergie électrique.

Dans une étape 11, on introduit la carte à puce 3 en butée au fond de l'ouverture 9. Ceci a pour effet de fermer l'interrupteur 10 de sorte que l'afficheur 2 et le circuit électronique 5 sont alimentés électriquement. Electriquement alimenté, le circuit électronique 5 génère une première commande portant sur une lecture de l'image numérique de numéro de compte personnel 7 dans le micro-circuit 4 mis en contact avec le circuit électronique 5 et l'alimentation électrique de l'emplacement 9 par la position en butée de la carte à puce 3 au fond de l'ouverture 9.

Dans une étape 12, si le micro-circuit 4 répond à la première commande de lecture en fournissant une image numérique de numéro de compte personnel, le circuit électronique 5 envoie à l'afficheur 2, une commande d'écriture des quatre derniers chiffres du numéro de compte personnel. Si le micro-circuit 4 ne répond pas à la première commande de lecture en fournissant une image numérique de numéro de compte personnel, soit le circuit électronique 5 n'envoie à l'afficheur 2, aucune commande d'écriture, soit le circuit électronique 5 envoie à l'afficheur 2, une commande d'écriture de message d'erreur.

Dans une étape 13, on observe si des chiffres sont affichés en correspondance avec, c'est à dire par exemple égaux aux quatre chiffres de l'image estampée de numéro de compte personnel qui sont visibles sur la partie de carte à puce 3 restée à l'extérieur du dispositif 1.

Si les chiffres affichés sont égaux à ceux que l'on voit sur la partie droite de la carte à puce, on admet que la carte n'est pas falsifiée.

Si l'afficheur 2 n'affiche pas de chiffres égaux à ceux visible sur la partie droite de la carte à puce, on détecte une falsification de carte à puce.

Généralement, un micro-circuit 4 de vraie carte à puce contient un code de vérification statique 8 noté VS sur la figure 4. En technologie EMV par exemple, le code est de type SDA (Static Data Authentication en anglais). Le code de vérification constitue une signature du numéro de compte personnel que seul un organisme accréditeur peut générer au moyen d'un algorithme complexe. Un algorithme simple, symétrique de l'algorithme complexe, permet publiquement de vérifier l'authenticité du numéro de compte personnel au moyen du code de vérification. On peut citer par exemple les algorithmes à clés symétriques dans lesquels une clé privée détenue secrètement par l'organisme accréditeur, est associée à une clé publique.

Pour améliorer le dispositif 1, le circuit électronique 5 représenté en figure 3 est agencé de façon optionnelle pour lire le code de vérification statique dans le micro-circuit 4 et pour afficher une alarme sur l'afficheur 2 si le code de vérification statique ne vérifie pas l'image numérique de numéro de compte personnel qui est lue.

Par exemple la mémoire du circuit électronique 5 contient l'adresse particulière où lire le code de vérification dans le micro-circuit 4 et un micro-programme élaboré pour contrôler au moyen d'une clé publique que le code de vérification valide l'image numérique de numéro de compte personnel lisible dans le micro-circuit 4.

Le dispositif 1 est alors utilisé pour fonctionner de la façon suivante.

Dans le procédé expliqué précédemment en référence à la figure 5, des étapes 14 à 16 sont insérées entre les étapes 11 et 12.

Dans l'étape 14, pendant que la carte à puce 3 est introduite en butée au fond de l'ouverture 9, le circuit électronique 5 génère une deuxième commande portant sur la lecture du code de vérification dans le micro-circuit 4.

Dans l'étape 15, le circuit électronique 5 contrôle que le micro-circuit 4 répond à la deuxième commande de lecture en fournissant un code de vérification qui valide l'image numérique lue en étape 11. Si ce n'est pas le cas, le circuit électronique 5 exécute l'étape 16. Le circuit électronique 5 exécute alors l'étape 12 précédemment décrite, en cas de validation positive en étape 15.

Dans l'étape 16, le circuit électronique 5 génère une alarme par exemple en affichant un message d'erreur sur l'afficheur 2 ou en émettant un signal sonore au moyen d'un vibreur non représenté.

## Revendications

1. Dispositif (1) pour permettre de détecter une falsification de carte à puce (3) comprenant sur sa face avant un micro-circuit (4) et une image estampée de numéro de compte personnel, un afficheur (2), un circuit électronique (5) agencé pour lire une image numérique de numéro de compte personnel dans le micro-circuit (4) lorsque la carte à puce (3) est mise en contact avec le dispositif (1) et pour afficher sur l'afficheur (2) des chiffres du numéro de compte personnel lu et **caractérisé en ce que** le circuit électronique (5) est agencé pour lire un code de vérification statique dans le micro-circuit (4) et pour afficher une alarme sur l'afficheur (2) si le code de vérification statique ne vérifie pas l'image numérique de numéro de compte personnel qui est lue.

2. Dispositif selon la revendication 1, **caractérisé en ce qu'**il est agencé pour laisser visibles les chiffres affichés de l'image estampée de numéro de compte personnel lorsque la carte à puce (3) est mise en contact avec le dispositif (1).

3. Dispositif selon la revendication 2, **caractérisé en ce qu'**il comprend une ouverture (9) permettant d'introduire seulement une partie la carte à puce (3) comprenant le micro-circuit (4) de façon à ce que les chiffres de l'image estampée du numéro de compte personnel qui sont affichés, restent visibles sur une partie non introduite de la carte à puce (3).

4. Procédé pour détecter une falsification de carte à puce (3) comprenant sur sa face avant un micro-circuit (4) et une image estampée de numéro de compte personnel, comprenant des étapes consistant à:
- générer une première commande portant sur une lecture d'une image numérique de numéro de compte personnel dans le micro-circuit (4);
- afficher des chiffres du numéro de compte personnel si le micro-circuit (4) répond à la première commande de lecture en fournissant une image numérique de numéro de compte personnel;
- observer si des chiffres sont affichés en correspondance avec des chiffres de l'image estampée de numéro de compte personnel, et **caractérisé en ce qu'**il comprend des étapes consistant à:
- générer une deuxième commande portant sur une lecture d'un code de vérification statique dans le micro-circuit (4);
- contrôler que le micro-circuit (4) répond à la deuxième commande de lecture en fournissant un code de vérification statique qui valide l'image numérique de numéro de compte personnel fournie en répondant à la première commande de lecture;
- générer une alarme si le code de vérification statique ne valide pas l'image numérique de numéro de compte personnel fournie en répondant à la première commande de lecture.

5. Procédé selon la revendication 4, **caractérisé en ce que** dans l'étape consistant à afficher des chiffres du numéro de compte personnel lu, les chiffres en correspondance de l'image estampée de numéro de compte personnel, sont visibles sur la carte à puce (3).

6. Procédé selon la revendication 5, **caractérisé en ce que** dans l'étape consistant à générer une première commande de lecture, une partie de la carte à puce (3) comprenant le micro-circuit (4) est introduite dans un dispositif (1) de façon à ce que les chiffres de l'image estampée du numéro de compte personnel à afficher, restent visibles sur une partie non introduite de la carte à puce (3).
